# EUROPEAN PATENT APPLICATION

(11) **EP 4 624 312 A1**
(43) Date of publication of application: **01.10.2025**
(21) Application number: 25166325.8
(22) Date of filing: 26.03.2025
(51) Int. Cl.: B62D 33/06

(54) **MODULAR CAB STRUCTURE OF A UTILITY MOTOR VEHICLE**

(30) Priority: 28.03.2024 CZ 20240111
(71) Applicant: TATRA TRUCKS a.s., 742 21 Kopnvnice (CZ)
(72) Inventor: Smolka, Radomír, 74258 Príbor (CZ); Marek, Vlastimil, 75701 Valasské Mezirící, Krásno nad Becvou (CZ)
(74) Representative: Havlík, Michal

(57) **Abstract**

In a cab structure of a utility motor vehicle are parallel to the bottom longitudinal beams (8, 9, 10) spaced from them planar symmetrically arranged inner longitudinal beams (7) in the shape of lying letter L, which are connected to the front under-window transverse beam (13) by the free end of the shorter arm of the L shape and to the bottom end of the rear inner pillar (6) by the rear end, wherein between the bottom end of the rear inner pillar (6), respective rear end of the inner longitudinal beam (7), on one side, and the bottom end of the last pillar (5), respective rear end of the bottom longitudinal beam (8, 9, 10), rear bottom transverse beam (16) is connected.

## Description

### Technical Field

The invention relates to the modular cab structure of a utility motor vehicle, especially truck or working machinery, which is connectable to chassis.

### Prior Art

The prior art e.g. discloses the solution according to CN107176214 (further only CN1). Here the cab is only meant for working machinery (articulated dump truck) and thus constructed only for one row of seats - probably only for one. There is also the space for only one door. Very different is the construction of the floor, which in the solution according to CN1 consists only of outside longitudinal beams and three transverse beams. Cab according to CN1 could probably be modified into various width and length versions, but the CN1 document doesn't deal with this.

Cab construction according to CN106143652 is largely similar to the solution from CN107176214.

Solution according to WO2005066014A1 (priority application DE10360736A1) uses parts made from pressed sheet metal and at the same time describes width modularity in addition to the length one. But only two door version is considered here as well.

Solution according to CS278474 describes, same as the previous solution, only the two-door version of the cab. The construction is not made of square tubes.

CZ5657U is also known from the prior art, here the structure consists of light alloy profiles connected by node members. This solution does not expressly deal with the incursion of the motor space into the cab space, but according to the drawings, it is possible.

All above mentioned embodiments, apart from DE10360736A1, do not consider the incursion of motor space into the cab space and thus the need to use motor tunnel, respective variability of the cab, especially four-door cab.

### Summary of the Invention

Disadvantages of the prior art are solved by the modular cab structure of a utility motor vehicle, especially truck or working machinery, according to the invention, which is connectable to a chassis. The structure contains longitudinal beams, transverse beams and pillars, which are mutually connected always with welded joints and which form two planar symmetrical sides. The sides are in their front parts connected to each other using the front above-window transverse beam and font under-window transverse beam and in their rear parts using rear top transverse beam and other rear transverse beams. The sides also contain at least front pillar, second pillar and last pillar, which are mutually connected using top longitudinal beam and bottom longitudinal beam. The front pillar, first top longitudinal beam, second pillar and first bottom longitudinal beam form the doorframe of the front doors.

According to the invention, there are, parallel to the bottom longitudinal beams, spaced from them, planar symmetrically arranged inner longitudinal beams in the shape of lying L, which are connected to the front under-window transverse beam by the free end of the shorter arm of the L shape and to the bottom end of the rear inner pillar by the rear end. Between the bottom end of the rear inner pillar, respective rear end of the inner longitudinal beam, on one side, and the bottom end of the last pillar, respective rear end of the bottom longitudinal beam, rear bottom transverse beam is connected. The spacing generally corresponds to the installation elements for the cab on the frame of the vehicle / working machinery.

Advantageous embodiment of the invention consists of having rear middle transverse beam connected between the rear inner pillars.

Another advantageous embodiment of the invention consists of having the longitudinal beams, transverse beams and pillars formed by steel square tubes or bent steel sheet metal, wherein the heights of the pillars and/or lengths of the longitudinal beams and/or transverse beams, respective the distances between them are chosen based on the structure version.

Another advantageous embodiment of the invention consists of, to create a lower version of the structure, especially for installing up to four seats next to each other in the first row, having the distance between longitudinal beams shortened, first bottom longitudinal beams prolonged, pillars shortened, second bottom longitudinal beams and rear bottom transverse beams moved upwards and rear inner pillars moved outward or inward with corresponding shortening, respective prolonging the transverse beams, and rear middle transverse beam moved upwards.

Another advantageous embodiment of the invention consists of, to create a prolonged version of the structure, especially for emergency seating, having the last, fourth pillar arranged spaced behind the third pillar, and this in the bottom connected with the second bottom longitudinal beam, tied up to the first bottom longitudinal beam, and prolonged first top longitudinal beam.

Another advantageous embodiment of the invention consists of, to create a prolonged version of the structure, especially with a space for rear row of seats, four next to each other and two rear facing seats, having the last, fifth pillar arranged spaced behind the fourth pillar, and this in the bottom connected with the third bottom longitudinal beam, tied up to the second bottom longitudinal beam, and in the top with the second top longitudinal beam.

Above stated makes clear that depending of the version of the structure, the last pillar particularly consists of third pillar in the basic version according to the independent claim and third, respective fourth pillars for the prolonged versions of the structure.

Another advantageous embodiment of the invention consists of having the third pillar, top longitudinal beam, fourth pillar and third bottom longitudinal beam forming the doorframe of the rear doors in prolonged versions.

Another advantageous embodiment of the invention consists of having the bottom longitudinal beams in doorframes of the doors offset and/or bent in inward direction of the structure, compared to the plane of the side to provide better space for entering the cab.

Another advantageous embodiment of the invention consists of having, to provide for the arrangement of external area of the side sheathing of the cab in the same plane as the outer areas of the front pillar and first top longitudinal beam, the outer area of the second and every further pillar and longitudinal beams in comparison with the outer areas of the front pillar and first top longitudinal beam, offset inwards into the structure.

Another advantageous embodiment of the invention consists of having the sheathing of the modular structure of the cab formed by sheet metal glued to the outer areas of the door frames and on the outer area of the second and every further pillar and/or fixed side windows, which are also glued to the outside area of the pillars, and/or frames for the installation of sash windows, that are glued to the outside area of the door frames, wherein possible differences in offset are compensated for using appropriate layer of glue.

Another advantageous embodiment of the invention consists of having in exposed places, i.e. between the pillars and on the door frames, the sheet metal flanged, wherein the flanges reach over the pillars and vertical parts of door frames in width.

Presented invention allows the ingress of the motor space into the cab space and thus counts with the necessity of using a motor tunnel. Modular arrangement also implies the possibility to always use the same front door. By changing the lengths and pattern, it is possible to get various length, height and width variants, including variability of the number and arrangement of seats.

### Overview of the Drawings

The invention will be explained in more detail using a particular example embodiment shown in the drawings, of which
- fig. 1: in axonometric view from front and top, the structure of a cab in four-door embodiment with the space for a rear row of seats - four next to each other and two rear facing seats, wherein the two dot and dash line marks the differences against the version from fig 8
- fig. 2: in axonometric view from front and top, the structure of a cab in four-door embodiment illustrated in two dot and dash line, fitted with roof grid frame illustrated in solid line,
- fig. 3: in two dot and dash line the structure of a cab in four-door embodiment and door frames in solid lines,
- fig. 4: in side view and section (ground plan section) the side of the structure of a cab in four-door embodiment,
- fig. 5: in two dot and dash line the structure of a cab in four-door embodiment and side and door sheathing in solid lines,
- fig. 6: in several views, details and sections, the principle of embodying the side sheathing,
- fig. 7: in two dot and dash line the structure of a cab in four-door embodiment and another variant of side sheathing in solid lines,
- fig. 8: in axonometric view from front and top, the basic module of the structure, which all the other embodiments are based on,
- fig. 9: version of the cab that is meant for the so-called lowered installation, wherein the two dot and dash line marks the differences against the version from fig. 8,
- fig. 10: in axonometric view from front and top the prolonged version of the cab meant for lowered installation and space for emergency seating, wherein the two dot and dash line marks the differences against the version from fig. 9.

### Example Embodiments of the Invention

To make the whole text clearer and simpler, the reference numerals with apostrophes, which refer to identical, only mirrored parts of the structure, would not be mentioned in the following.

Although the present invention will be further described in connection with certain preferred embodiments, it isn't the intention of this description to limits its scope only to thus described embodiments. In contrary, it is the objective of this description to comprise and cover all alternatives, modifications and equivalents of such embodiment that fall into the substance and claimed scope of present invention as defined in attached claims.

Both above mentioned and further described features of the invention could also be used individually alone or in any meaningful mutual combination. Depicted and described embodiments aren't to be considered a closed list, but have the character of examples for describing the invention.

References mentioned in dependent claims refer to other embodiment of the object of the independent claim using features of the dependent claim. But these don't mean a resignation on attaining stand-alone, objective protection for features of these dependent claims.

The invention thus isn't limited to the embodiment described, but a person skilled in the art can embody the details of the invention using many variants within the scope of the attached claims.

Indications of position, such as up, down, lateral, horizontal, vertical, etc., refer to the presently described, and also shown figure, respective the most common position during use. They have thus to be adapted accordingly when the position changes.

Modular cab structure of a utility motor vehicle, especially truck or working machinery, which is connectable to a chassis, in example embodiment contains longitudinal beams 7, 8, 9, 10, 11, 12, transverse beams 13, 14, 15, 16, 17 and pillars 1, 2, 3, 4, 5, 6, that are always mutually connected with welded joints and which form two planar symmetrical sides. The sides are in their front parts connected to each other using the front above-window transverse beam 14 and font under-window transverse beam 13 and in their rear parts using rear top transverse beam 17 and other rear transverse beams 15, 16. The sides also contain at least front pillar 1, second pillar 2 and last pillar 3, 4, 5, which are mutually connected using top longitudinal beam 11 and bottom longitudinal beam 8, 9. The front pillar 1, first top longitudinal beam 11, second pillar 2 and first bottom longitudinal beam 8 form the doorframe of the front doors.

According to the invention, there are, parallel to the bottom longitudinal beams 8, 9, 10, spaced from them, planar symmetrically arranged inner longitudinal beams 7 in the shape of lying L, which are connected to the front under-window transverse beam 13 by the free end of the shorter arm of the L shape and to the bottom end of the rear inner pillar 6 by the rear end. Between the bottom end of the rear inner pillar 6, respective rear end of the inner longitudinal beam 7, on one side, and the bottom end of the last pillar 3, 4, 5, respective rear end of the bottom longitudinal beam 9, 10, rear bottom transverse beam 16 is connected.

Rear middle transverse beam 15 is connected between the rear inner pillars 6.

Longitudinal beams 7, 8, 9, 10, 11, 12, transverse beams 13, 14, 15, 16, 17, and pillars 1, 2, 3, 4, 5, 6, are formed by steel square tubes or bent steel sheet metal, wherein the heights of the pillars 1, 2, 3, 4, 5, 6, 61 and/or lengths of the longitudinal beams 7, 8, 9, 10, 11, 12 and/or transverse beams 13, 14, 15, 16, 17, respective distances between them are chosen based on the version of the structure.

To create a lower version of the structure, especially for installing up to four seats next to each other in the first row, the distance between longitudinal beams 7 is shortened, first bottom longitudinal beams 8 are prolonged, pillars 2, 3, 6 are shortened, second bottom longitudinal beams 9 and rear bottom transverse beams 16 are moved upwards and rear inner pillars 6 are moved outward or inward with corresponding shortening, respective prolonging the transverse beams 16, 15, and rear middle transverse beam 15 is moved upwards.

To to create a prolonged version of the structure, especially for emergency seating, last pillar 5 is arranged spaced behind the third pillar 3, and this is in the bottom connected with the second bottom longitudinal beam 9, tied up to the first bottom longitudinal beam 8, and prolonged first top longitudinal beam 11.

To create a prolonged version of the structure, especially with a space for rear row of seats, four next to each other and two rear facing seats, last, fifth pillar 5 is arranged spaced behind the fourth pillar 4, and this is in the bottom connected with the third bottom longitudinal beam 10, tied up to the second bottom longitudinal beam 9, and in the top with the second top longitudinal beam 12.

Above stated makes clear that depending of the version of the structure, the last pillar 3, 4, 5 particularly consists of third pillar 3 in the basic version according to the independent claim and fourth, respective fifth pillars 4, 5 for the prolonged versions.

Third pillar 3, first top longitudinal beam 11, or possibly second top longitudinal beam 12, fourth pillar 4 and third bottom longitudinal beam 10 create the doorframe for rear doors in prolonged versions.

Bottom longitudinal beams 8, 9, 10 in the doorframes of the doors are offset and/or bent in inward direction of the structure, compared to the plane of the side to provide better space for entering the cab.

To provide for the arrangement of external area of the side sheathing of the cab in the same plane as the outer areas of the front pillar 1 and first top longitudinal beam 11, the outer area of the second and every further pillar 2, 3, 4, 5 and longitudinal beams 9, 10, 12 are offset inwards into the structure in comparison with the outer areas of the front pillar 1 and first top longitudinal beam 11.

The sheathing of the modular structure of the cab is formed by metal sheets 21, 22, 23, 24, 25 glued to the outer areas of the door frames 20, 30 and on the outer area of the second and every further pillar 2, 3, 4, 5, and/or fixed side windows 28, which are also glued to the outside area of the pillars 2, 3,, and/or frames 27, 29, e.g. from aluminium alloy, steel or glass for the installation of sash windows, that are glued to the outside area of the door frames 20, 30. Possible differences in offset are compensated for using appropriate layer of glue 99.

In exposed places, i.e. between the pillars 2, 3, 1, 5 and on the door frames 20, 30, the sheet metal 21, 23 is flanged, wherein the flanges reach over the pillars 1, 2 and vertical parts of door frames 20, 30 in width.

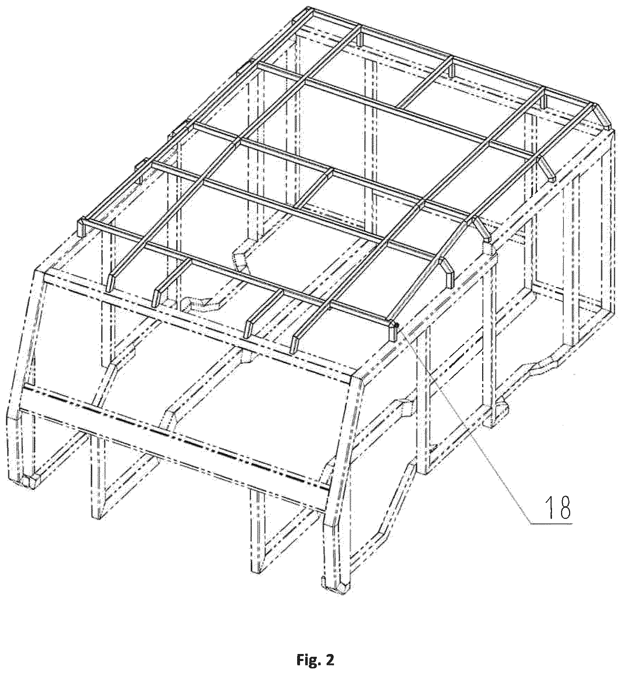

Roof grid frame 18 is welded to the top transversal beams and longitudinal beams 11, 12, 14, 17 consisting of beams formed by square tubes or bent sheet metal arranged in grid construction that are connected by welding (see fig. 2) The frame 18 could of course have various shapes and arrangements.

Also many different reinforcements and anchoring elements consisting of square tubes or bent sheet metal, that aren't illustrated or described in detail here, could make part of the structure.

Presented invention takes into account the ingress of motor space into the cab. In the space between inner longitudinal beams 7 and front under-window transverse beam 13, the motor space cover is welded, it consists of bent metal parts. In case it is necessary, this cover could occupy the space up to the part of the rear wall of the cab, outlined by the bottom part of the inner rear pillars 6 and rear middle transverse beam 15, which could be placed more up or down as necessary, although this is not illustrated in detail.

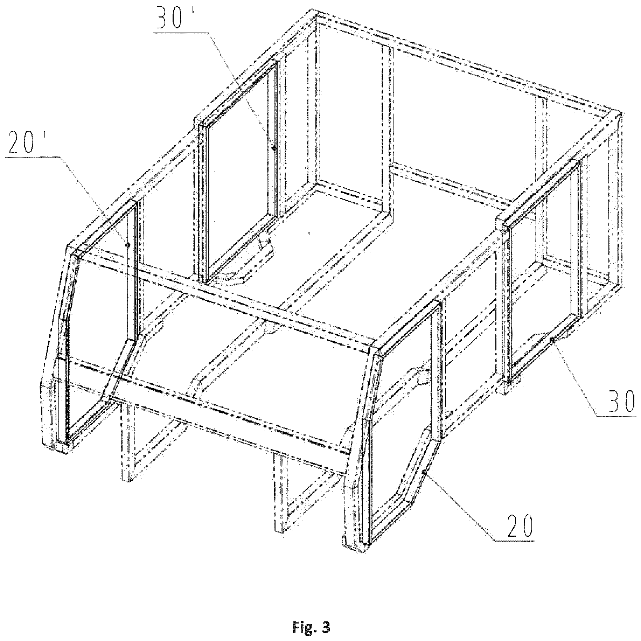

Pillars 1, 2 and longitudinal beams 8, 11 form the doorframe of front doors, which are installed using rotary hinges onto the front pillars 1. These doorframes together with front doors have in all derived versions of the cab (see further) always the same shape (see fig. 3). The space determined by the pillars 3, 4, and longitudinal beams 10, 11, 12 forms the doorframe of the back doors, which are similarly installed using rotary hinges onto the third pillars 3.

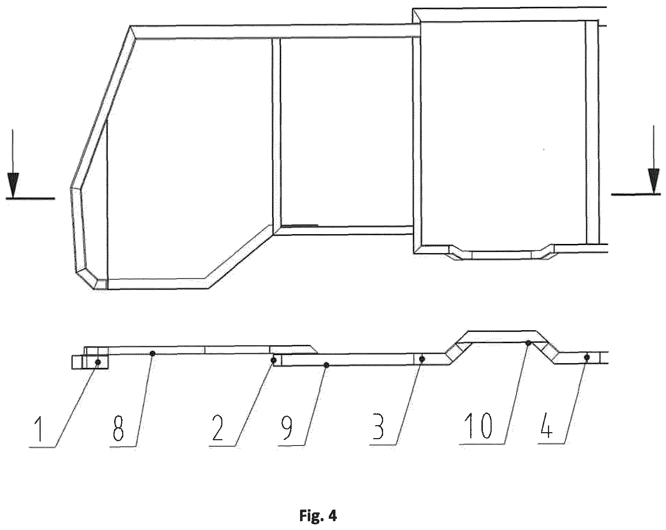

Doorframes of the front doors are constructed so that the first bottom longitudinal beam 8 is welded between pillars 1, 2 offset in the direction inside and thus creates better space for entering the cab. Third bottom longitudinal beam 10 is then constructed so that it is in the space of the doorframe of the rear doors bent in the direction into the structure, respective cab and thus also creates better space for entering the cab (see fig. 4).

Frames 20 of front doors and frames 30 of rear doors consist of steel square tubes or bent steel sheets, which are connected using welding and other reinforcements, not illustrated.

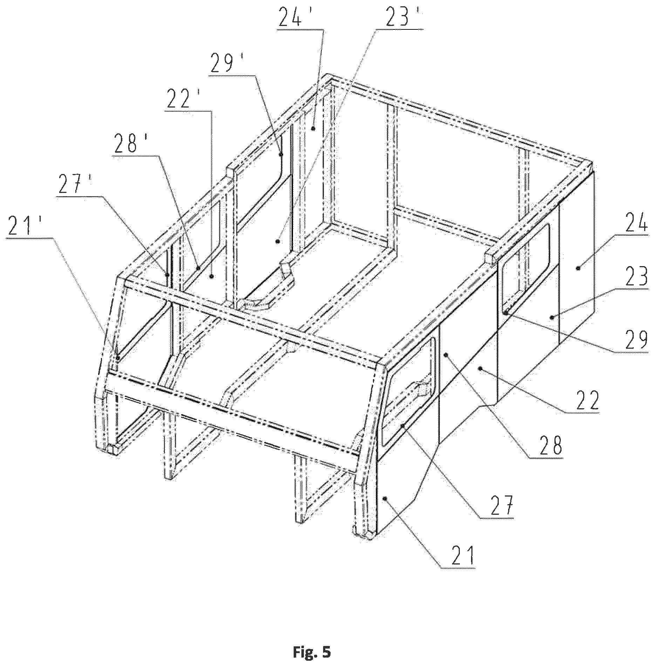

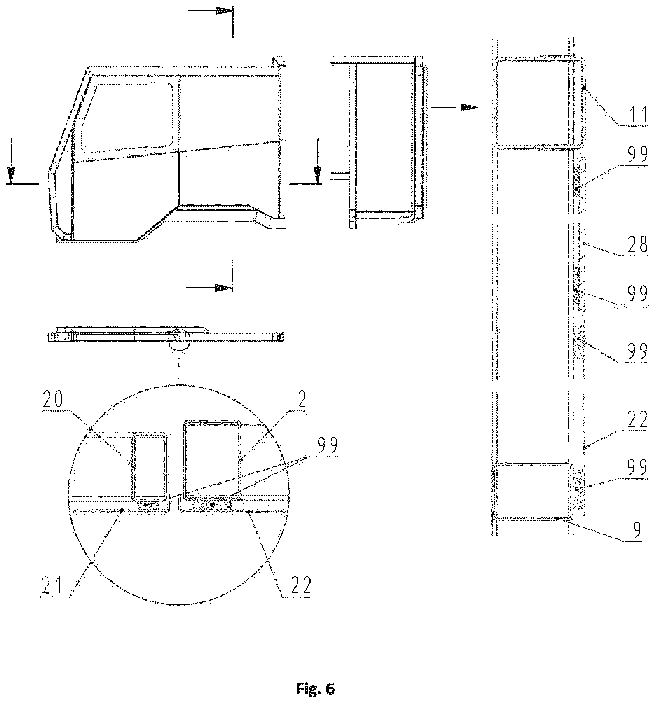

Side sheathing of the cab in this example embodiment (see fig. 5 and 6) consist of:
- first metal sheet 21 and third metal sheet 23 from aluminium alloy that are glued using glue 99 onto the outer area of the door frames 20, 30,
- second metal sheet 22 that is glued using glue 99 onto the outer area of pillars 2, 3 and longitudinal beam 9,
- fourth metal sheet 24 that is glued using glue 99 onto the outer area of pillars 4, 5 and third bottom longitudinal beam 10 and second top longitudinal beam 12,
- fixed side windows 28 that are glued using glue 99 onto the outer area of pillars 2, 3,
- frames 27, 29 from aluminium alloy, meant for the installation of sash windows that are glued using glue 99 onto the outer area of door frames 20, 30.

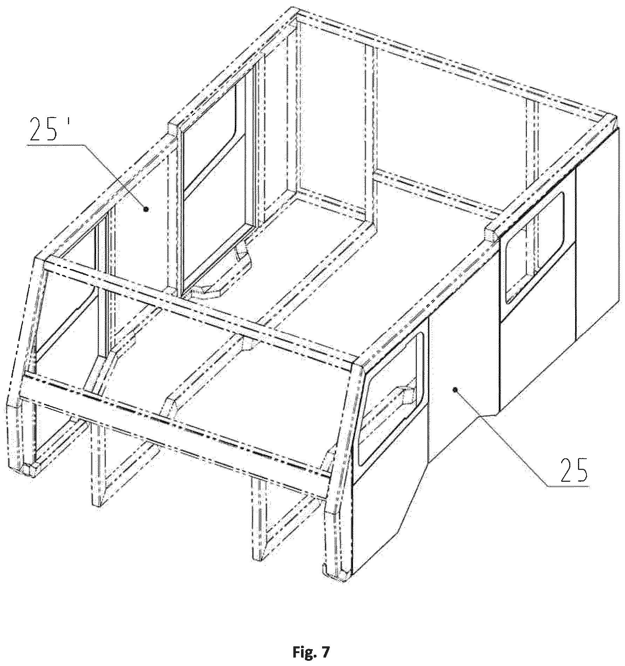

Second metal sheet 22 and fixed side window 28 could be alternatively replaced by prolonged metal sheet 25 that is glued onto the outer area of pillars 2, 3 and second bottom longitudinal beam 9 (see fig. 7).

In exposed places, i.e. between pillars 2, 3, 4, 5 and on the door frames 20, 30, the metal sheets 21, 23 are flanged, wherein the flanges reach over the pillars 1, 2 and vertical parts of door frames 20, 30 in width. A better-looking gap with rounded edges is thus created between linked up sheet metal parts. At the same time, it is not necessary to seal the gap between metal sheets 21, 23 and pillars 1, 2 (see fig. 6).

Space delimited by the front pillars 1 and transverse beams 13, 14 is meant for gluing-in the windscreen.

Space delimited by the front pillars 1 and transverse beam 13 is meant for the installation of the bonnet, which is fixed using rotary hinges to the front under-window transverse beam 13.

Outer area of the rear wall formed by rear pillars 5, 6 and transverse beams 15, 16, is meant for gluing-on the rear covering metal sheets.

Roof of the cab consists of individual sheet metal or laminate parts that are glued to the roof frame 18, longitudinal beams 11, 12 and transverse beams 14, 17.

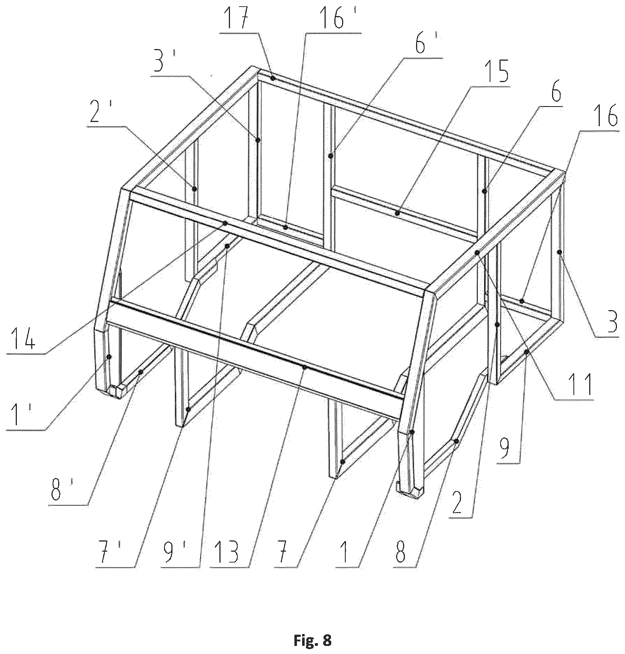

In comparison to the embodiment of the basic module, respective the version of cab structure from fig. 8, described above, also above-described derived solutions, whose protection is also claimed, are described below in other words.

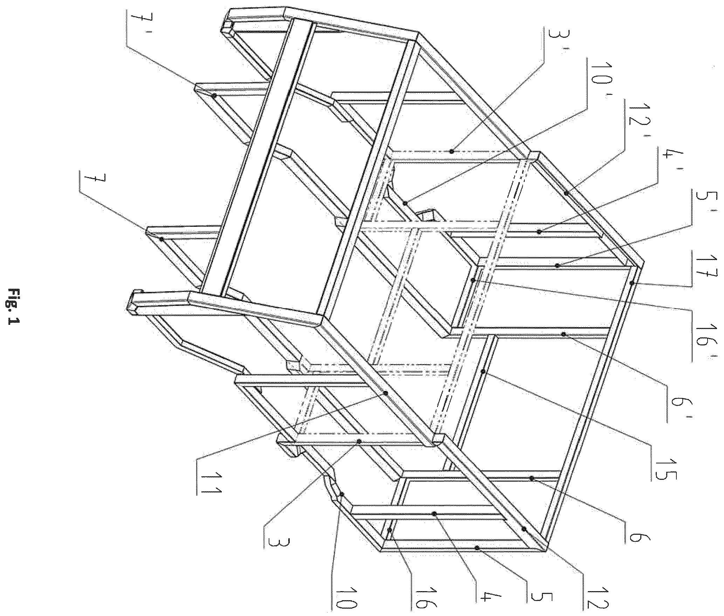

Starting with the basic module according to fig. 8, adding pillars 4, 5, longitudinal beams 10, 12, prolonging longitudinal beams 7, and thus moving the rear wall consisting of rear inner pillars 6, and transverse beams 15, 16, 17 creates a prolonged version of the structure (see fig. 1).

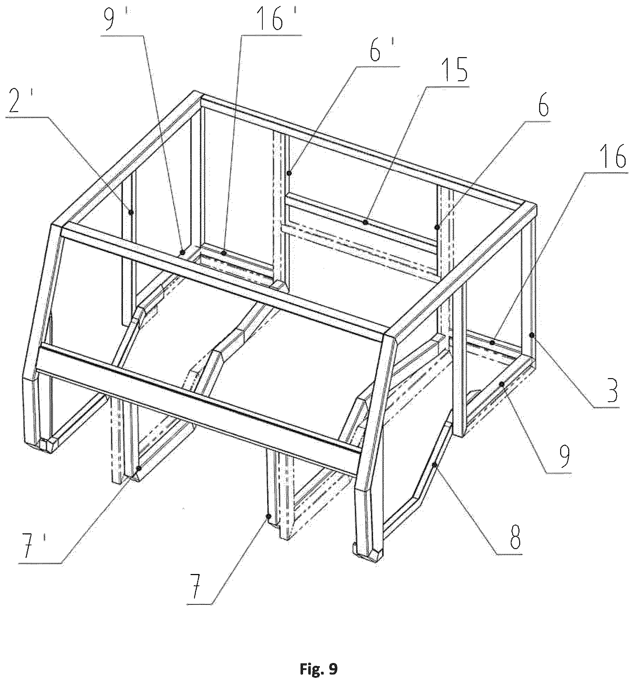

Starting again with the basic module according to fig. 8, moving apart from each other, or possibly change of the shape of inner longitudinal beams 7, prolonging the first bottom longitudinal beams 8, shortening of pillars 2, 3, 6, moving second bottom longitudinal beams 9 and rear bottom transverse beams 16 up and moving rear inner pillars 6 outside or inside and connected shortening/prolonging of transverse beams 16, 15 and movement rear middle transverse beam 15 upwards, creates a version of the cab that is meant for the so-called lowered installation (see fig. 9).

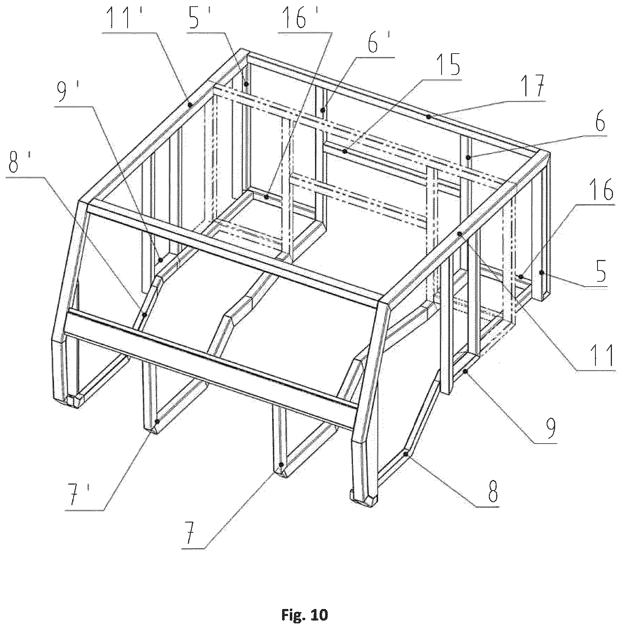

Starting now with the version for lowered installation, prolonging the longitudinal beams 7, 8, 11, shortening the second bottom longitudinal beams 9, movement of third pillars 3 to the front, movement of the rear wall consisting of the pillars, the rear pillars 5, 6 and transverse beams 15, 16 creates a prolonged version of the cab meant for lowered installation, but with the space for emergency seating (see fig. 10). Space delimited by pillars 3, 5 and longitudinal beams 8, 11 creates the doorframe of the rear doors. By having the first bottom longitudinal beam 8 offset in the direction inside, same as in the front part, creates space for better entry to the cab even in this version.

All versions of the structure are embodied as planar symmetrical according to the middle longitudinal plane, so that they could be used for vehicles / working machinery with bot left-hand and righ-hand steering.

Welded joints as the basic, most advantageous solution are chosen here regarding maximum rigidity and strength. They could be of course replaced with another type of joints, e.g. bolted joints, but keeping in mind it is on the expense of the requirements of rigidity and strength. Within these boundaries are such joints considered technical equivalents in the scope of required protection.

### List of Reference Numerals

- 1: front pillar
- 2: second pillar
- 3: third pillar
- 4: fourth pillar
- 5: fifth pillar
- 6: rear inner pillar
- 7: inner longitudinal beam
- 8: first bottom longitudinal beam
- 9: second bottom longitudinal beam
- 10: third bottom longitudinal beam
- 11: first top longitudinal beam
- 12: second top longitudinal beam
- 13: front under-window transverse beam
- 14: front above-window transverse beam
- 15: rear middle transverse beam
- 16: rear bottom transverse beam
- 17: rear top transverse beam
- 18: roof grid frame
- 20: door frame of front doors
- 21: first metal sheet (from aluminium alloy)
- 22: second metal sheet (from aluminium alloy)
- 23: third metal sheet (from aluminium alloy)
- 24: fourth metal sheet (from aluminium alloy)
- 25: prolonged metal sheet
- 27: first frame
- 28: fixed side window
- 29: second frame
- 30: door frame of rear doors
- 99: glue

## Claims

1. Modular cab structure of a utility motor vehicle, especially truck or working machinery, which is connectable to a chassis, containing longitudinal beams (7, 8, 9, 10, 11, 12), transverse beams (13, 14, 15, 16, 17) and pillars (1, 2, 3, 4, 5, 6) mutually connected always with welded joints, that form two planar symmetrical sides that are in their front parts mutually connected using front above-window transverse beam (14) and front under-window transverse beam (13) a and in their rear parts by rear top transverse beam (17) and other rear transverse beams (15, 16), wherein the sides contain at least front pillar (1), second pillar (2) and last pillar (3, 4, 5), which are mutually connected using top longitudinal beam (11, 12) and bottom longitudinal beam (8, 9, 10), wherein the front pillar (1), first top longitudinal beam (11), second pillar (2) and first bottom longitudinal beam (8) form the doorframe of front doors,
***characterised by***
having parallel to the bottom longitudinal beams (8, 9, 10) spaced from them planar symmetrically arranged inner longitudinal beams (7) in the shape of lying letter L, which are connected to the front under-window transverse beam (13) by the free end of the shorter arm of the L shape and to the bottom end of the rear inner pillar (6) by the rear end, wherein between the bottom end of the rear inner pillar (6), respective rear end of the inner longitudinal beam (7), on one side, and the bottom end of the last pillar (3, 4, 5), respective rear end of the bottom longitudinal beam (9, 10), rear bottom transverse beam (16) is connected.

2. Modular structure according to claim 1,
***characterised by***
having the rear middle transverse beam (15) connected between rear inner pillars (6).

3. Modular structure according to any of the previous claims,
***characterised by***
having the longitudinal beams (7, 8, 9, 10, 11, 12), transverse beams (13, 14, 15, 16, 17) and pillars (1, 2, 3, 4, 5, 6) formed of steel square tubes or bent steel sheet metal, wherein the heights of pillars (1, 2, 3, 4, 5, 6) and/or lengths of longitudinal beams (7, 8, 9, 10, 11, 12) and/or transverse beams (13, 14, 15, 16, 17), respective the distances between them are chosen based on the structure version.

4. Modular structure according to claim 1 to 3,
***characterised by***
having, to create the lowered version of the structure, especially for the installation of up to four seats next to each other in the first row, shortened the distance between longitudinal beams (7), prolonged first bottom longitudinal beams (8), shortened pillars (2, 3, 6), moved second bottom longitudinal beams (9) and rear bottom transverse beams (16) upwards and moved rear inner pillars (6) in the direction outside or inside with corresponding shortening, respective prolonging transverse beams (16, 15), and moving the rear middle transverse beam (15) upwards.

5. Modular structure according to claim 3 or 4
***characterised by***
having, to create the prolonged version of the structure, especially for emergency seating, last pillar (5) arranged spaced from and behind the third pillar (3), this being at the bottom connected to the second bottom longitudinal beam (9), tied-up to the first bottom longitudinal beam (8), and prolonged first top longitudinal beam (11).

6. Modular structure according to claim 1 to 3
***characterised by***
having, to create the prolonged version of the structure, especially with the space for rear row of seats, four next to each other and two rear facing seats, last, fifth pillar (5) arranged spaced from and behind the fourth pillar (4), this being at the bottom connected to the third bottom longitudinal beam (10), tied-up to the second bottom longitudinal beam (9), and in the top with second top longitudinal beam (12).

7. Modular structure according to claim 5 or 6,
***characterised by***
having the third pillar (3), top longitudinal beam (11, 12), fourth pillar (4) and third bottom longitudinal beam (10) form the doorframe of rear doors.

8. Modular structure according to any of the previous claims,
***characterised by***
having the bottom longitudinal beams (8, 9, 10) in doorframes offset and/or bent in the direction inside the structure to provide better space for entering the cab.

9. Modular structure according to any of the previous claims,
***characterised by***
having, to provide the arrangement of outer area of the side sheathing of the cab in one plane together with the outer areas of the front pillar (1) and first top longitudinal beam (11), the outer area of second and every other pillar (2, 3, 4, 5) and longitudinal beams (9, 10, 12) and door frames (20,30) offset in the direction into the structure compared to the outer area of the front pillar (1) and first top longitudinal beam (11).

10. Modular structure according to claim 9,
***characterised by***
having the sheathing of the modular cab structure consist of metal sheets (21, 22, 23, 24, 25) glued to the outer area of door frames (20, 30) and onto the outer area of the second and any other pillar (2, 3, 4, 5), and/or fixed side windows (28), which are also glued to the outer area of the pillars (2, 3), and/or frames (27, 29) for the installation of sash windows, which are glued to the outer area of door frames (20, 30), wherein possible differences in offset are compensated for using appropriate layer of glue (99).

11. Modular structure according to claim 10,
***characterised by***
having in exposed places, i.e. between the pillars (2, 3, 4, 5) and on door frames (20, 30), the metal sheets (21, 23) flanged, wherein the flanges reach over the pillars (1, 2) and vertical parts of door frames (20, 30) in width.
